# EUROPÄISCHE PATENTSCHRIFT

(11) **EP 0 507 127 B1**
(45) Veröffentlichungstag und Bekanntmachung des Hinweises auf die Patenterteilung: **18.01.1995**
(21) Anmeldenummer: 92104236.2
(22) Anmeldetag: 12.03.1992
(51) Int. Cl.: B65G 53/56

(54) **Rohrweiche**
Pipe switch
Distributeur à tube

(30) Priorität: 05.04.1991 DE 4110996
(43) Veröffentlichungstag der Anmeldung: 07.10.1992
(73) Patentinhaber: Bühler GmbH, D-38114 Braunschweig (DE)
(72) Erfinder: Hilmer, Jens, Dipl.-Ing., D-38118 Braunschweig (DE); Huber, Werner, D-38116 Braunschweig (DE)
(74) Vertreter: Révy von Belvárd, Peter

(56) Entgegenhaltungen:
- DD-A- 64 006
- DE-A- 2 060 803
- DE-B- 1 189 464
- DE-U- 1 877 476
- US-A- 4 252 479

## Beschreibung

Die Erfindung betrifft eine Rohrweiche nach dem Oberbegriff des Anspruches 1.

Mehrwegeweichen der unterschiedlichsten Ausführungsvarianten, als Ein- oder Mehrkanalweiche, Rotations- oder Schiebeweiche, sind bekannt, die den differierenden Einsatzbedingungen entsprechen. So zeigen die FR-A-1 507 545 und die GB-A-733 013 Rotationsweichen, deren konische Küken bzw. Ventilkörper. Bei Verdrehung des Kükens bzw. Ventilkörpers wird die wahlweise Verbindung der Einlassleitung mit verschiedenen Auslassleitungen bewirkt. Eine ähnliche Anordnung, die anstelle des Drehkükens einen Radstern mit Drehrohr vorsieht, zeigt die CH-A-140 556. Schiebeweichen, wie in der GB-A-1 423 355 oder dem DE-U-1 968 572 beschrieben, sind wegen ihrer flachen Bauweise bevorzugt, wobei der Schiebe-Ventilkörper zwei Kanäle aufweist. Die Schiebeweichen werden insbesondere dann verwendet, wenn wenige Auslassleitungen angesteuert werden. In dem DE-U-1 915 363 und in der GB-A-133 315 werden die Kugelweichen bzw. zylinderförmige Drehweichen beschrieben.

In der DE-B-1 280 788 ist eine Anordnung gezeigt, die beim Blasversatz zur Anwendung kommt, bei der ein quer zur Gutverblasrichtung verschiebbarer Schlitten ein der Gutverblasrichtung entsprechendes Förderrohr und ein gekrümmtes Ausblasrohr trägt. Dieses Schlittensystem ist eine Art "offenes" System, das nur einen einzigen Rohranschluss bewirkt.

Das DE-U-1 968 572 beschreibt eine Segment-Strassenweiche für Rohrpostanlagen, wobei eine einem Ventilkörper entsprechende Kammer, die zwei Rohrbogen-Abschnitte aufweist, innerhalb eines Gehäuses verschoben wird. Die relativ grosse Kammer wird von einem Zahnradgetriebe entlang im Gehäuse angebrachter Führungsschienen und auf Laufrädern bewegt.

All diesen auf Grund des verschiedenartiger Einsatzes so unterschiedlichen Weichen ist ein Problem gemeinsam. Die wahlweise Verbindung zwischen verschiedenen Anschlussstutzen über die Kanäle im Ventilkörper oder Ventilküken muss dicht sein und der Ventilkörper soll möglichst leicht und genau verstellt werden können, wobei kein Fördergut in das Gehäuse gelangen soll.

Bei den oben beispielhaft aufgeführten Weichen wird dies auf unterschiedliche Weise gelöst. So werden genau passend geformte Ventilkörper - meist Drehküken - bzw. an die Gehäuseinnenwand angepasste Schieber verwendet. Bei Mehrkanal-Rohrweichen kommt zur Erleichterung des Verstellvorgangs eine Art Rohrgerippe-Ventilkörper zum Einsatz. Die Führung des Ventilkörpers bei der Verstellung kann einerseits durch das Gehäuse selbst geschehen, wenn der Ventilkörper entsprechend eingepasst wird, anderseits über an der Gehäuseinnenwand liegende Führungseinrichtung, wie bespielsweise das DE-U-1 968 572 zeigt, oder auch - bei Verzicht auf geschlossene Gehäuse - über unabhängige Führungssysteme erfolgen.

Für bestimmte Anwendungsfälle wird aber ein geschlossenes Gehäuse erforderlich sein, wenn beispielsweise das Fördermedium ein giftiges Gas ist, das nicht nach aussen dringen darf, oder sauerstoffempfindlich ist, also keine Luft in den Förderkanal eindringen darf. Ein weiteres, bei Schüttgut auftretendes Problem liegt darin, dass bei Verstellung des Ventilkörpers im Kanal vorhandene Fördergutreste in das Gehäuseinnere gelangen könnten, wenn nicht vor der Verstellung der Kanal leergeblasen wird, was einen entsprechend grossen Aufwand an Zeit und Energie erfordert.

In einer bekannten Rotationsweiche dreht sich ein Einkanal-Küken in einem gasdichten Gehäuse. Der Übergang zwischen Gehäuse-Anschlussflanschen und dem Kanal ist dabei nicht dicht. Austretende Leckluft gelangt in einen Zwischenfreiraum zwischen Küken und Gehäuse. Auch hier muss, da die Gehäuseinnenwand Führungshilfe bei der Rotation zu leisten hat, die Gehäuseinnenwand sehr genau ge- und bearbeitet sein.

Das Anbringen von Dichtungen an den Verbindungsflanschen, das Einpassen der Ventilkörper ins Gehäuse oder der zeitraubende Zwischenschritt des Leerblasens: alle diese Massnahmen lösen nur Teilprobleme und bedingen - insbesondere für grössere Weichen - entweder Zeit- und Energieverschwerdung oder eine äusserst aufwendige, da präzise Fertigung.

Nun zeigt die DD-A-64 006 bereits eine Rohrweiche nach dem Oberbegriff des Anspruches 1. Allerdings baut diese Weiche relativ gross, ohne dass deswegen auf zahlreiche Umlenkungen der einzelnen Rohre und Kanäle verzichtet werden könnte. Darüberhinaus ist auch die Geradführung sehr unsicher, so dass diese Weiche in der Praxis keine Verbreitung gefunden hat.

Es stellt sich somit die Aufgabe, eine Weiche zur Verfügung zu stellen, die allen erwähnten Anforderungen entspricht, wobei das Gehäuse ohne spezielle, hochpräzise Bearbeitung herzustellen sein und dennoch eine kompakte Bauweise bei geringen Verlusten durch Rohrkrümmer erzielt werden sollte. Dies geschieht durch die Verwirklichung der kennzeichnenden Merkmale des Anspruches 1.

Ist das Gehäuse gasdicht ausgeführt und ist zwischen Ventilkörper und Gehäuse ein freier Gasraum vorgesehen, so können einerseits eventuell giftige Fördergase nicht - die Umwelt gefährdend - nach aussen dringen, und anderseits kommen, wenn dieser Gasraum beispielsweise von einem Inertgas erfüllt ist, bzw. unter Vakuum steht, sauerstoffempfindliche Fördergüter nicht in Kontakt mit Luft, die von aussen eindringen könnte, wobei der Gasraum ein entsprechend grosses Volumen an Inertgas aufzunehmen vermag, das (bis zur Reparatur allfälliger Undichtheiten) den Zustrom von Luft unterbinden kann, welcher Effekt in ähnlicher Weise auch im Falle eines Vakuums auftreten wird. Aus diesem Grunde ist ein bestimmtes Mindestmass für den Gasraum, insbesondere im Sinne des Anspruches 2, von Vorteil.

Ist das den Gasraum begrenzende Gehäuse annähernd rotationssymmetrisch ausgebildet, so ist es besonders druckstabil. Für Schiebeweichen bietet sich eine zylindrische Form an, wobei die Zylinderachse parallel zur Verschieberichtung liegt. Aber auch kugelsymmetrische Gehäuse, dann insbesondere für Rotationsweichen, sind möglich.

Wird wenigstens ein zusätzlicher Flansch am Gehäuse vorgesehen, über den Gas aus dem bzw. in den Gasraum aus- bzw. eingelassen werden kann, so wird sowohl die Wartung der Weiche, d.h. Entgasen, als auch das Füllen mit Inertgas bzw. das Auspumpen des Gasraumes vereinfacht.

Insbesondere bei grösseren Weichen ist eine doppelte, an verschiedenen Seiten des Ventilkörpers angreifende Führungseinrichtung vorzuziehen, zur besseren Sicherung der Verstell-Bewegungsbahn und zur verbesserten Aufnahme der Gewichtskräfte.

Für eine Schiebeweiche bietet sich als Führungseinrichtung eine eine Säulenführung als besonders präzise und vorteilhaft an, die jeweils in mit dem Ventilkörper verbundenen Führungshülsen gelagert ist. Zur statisch bestimmten Führung sollte vorzugsweise eine von zwei Führungssäulen in einer gabelförmigen Führungshülse gelagert sein. Bei heissem Fördermedium und/oder Fördergut wird sich der Weichenkörper stärker ausdehnen, als das Gehäuse. Durch die geeignete Wahl des Querschnitts der in der gabelförmigen Führungshülse gelagerten Führungssäule kann diese bei Wärmedilatation ausweichen, mögliche Spannungen an den Gehäusedurchführungen werden herabgesetzt. Dabei ist es vorteilhaft, wenn die Führungssäule entsprechend Anspruch 3 ausgeführt ist, da dann die Führungsfläche für die Gabel vergrössert und eine Punkt- oder Linienberührung, die zu grösserer Abnützung und schliesslich zu Ungenauigkeiten führt, vermieden ist.

Eine dem Anschlussstutzen zugeordnete Dichtungsanordnung mit einer Dichtungsplatte kann neben der Dichtung während des Fördervorganges selbst auch zur zusätzlichen Dichtung der Kanalöffnung während bzw. nach der Verstellung eingesetzte werden, wenn sie entsprechend Anspruch 6 ausgebildet ist, wobei damit auch das Problem gelöst wird, dass durch den relativ weiten Raum zwischen Gehäuse und Ventilkörper der Abdichtung besondere Bedeutung zukommt und eine gute Abdichtung unter solchen Gegebenheiten schwer zu erzielen ist.

Die Erfindung wird im folgenden anhand der Zeichnung beispielhaft beschrieben. Es zeigen:
- Fig. 1: einen Querschnitt durch eine erfindungsgemäss ausgebildeten Mehrkanal-Schiebeweiche, wovon
- Fig. 1A: ein vergrössertes Detail der Befestigung der Dichtungsringe veranschaulicht; die
- Fig. 2a und 2b: zwei Teilschnitte durch erfindungsgemässe Dichtungsplatten; und
- Fig. 3: eine bevorzugte Ausführungsform eines bei der Erfindung zur Anwendung kommenden Dichtungsträgerringes in einem Axialschnitt.

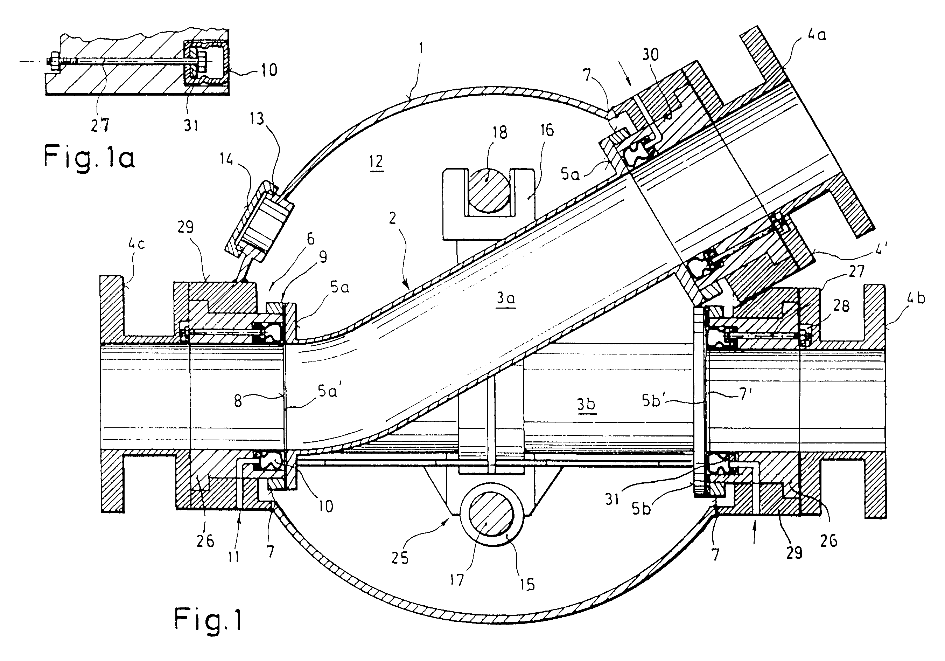

In Fig. 1 ist eine erfindungsgemässe Mehrwegeweiche gezeigt. In einem zylindrischen Gehäuse 1 ist ein Ventilkörper 2, der hier zwei Kanäle 3a und 3b besitzt, in einer Richtung senkrecht zur Zeichenebene verschiebbar. Es kann demnach entweder, wie im Fall der Fig. 1 durch den Kanal 3a gefördert werden, oder nach Verschiebung des Ventilkörpers 2 durch den Kanal 3b. Drei Anschlussstutzen 4a, 4b und 4c stellen die Verbindung zu den Förderrohrleitungen her, wobei 4c im allgemeinen der Stutzen der Zuführleitung ist und 4a und 4b die Stutzen für die anwählbaren Abführleitungen sind. Verbindungsflansche 5a und 5b an den Enden der beiden Kanale 3a und 3b wirken in den jeweiligen Offenstellungen mit einem Dichtungssystem 6 zusammen, das den entsprechenden Anschlussflanschen 4 zugeordnet ist. Dabei sind Dichtungsplatten 7 vorgesehen, die mit Durchgangsöffnungen versehen sind, die den Öffnungen des Kanals 3, im folgenden als Kanalendflächen 8 bezeichnet, entsprechen, wobei zur Abdichtung der Trennfugen 9 zwischen Dichtungsplatten 7 und Verbindungsflanschen 5 Dichtungsringe 10 dienen, die gegebenenfalls über pneumatische Leitungen 11 aufblasbar sind.

Die Dichtungsringe 10 liegen bevorzugt innerhalb eines Dichtungsträgerringes 26, an dem sie, vorzugsweise mittels Klemmschrauben 27, befestigt sind, die an einem Klemmring 31 (Fig. 1A) angreifen. Die diesen Dichtungsträgerringen 26 zugekehrten Flansche 4' der Anschlussstutzen 4a bis 4c weisen daher entweder mindestens eine, z.B. auch ringförmige, Ausnehmung 28 auf, die die Enden der Schrauben 27 aufnimmt, wie dies aus der Zeichnung hervorgeht. Alternativ, und bevorzugt, wird hingegen die Ausnehmung 28 im jeweiligen Dichtungsträgerring 26 vorgesehen, da dann die Anschlussstutzen 4a bis 4c nach dem Lösen der Befestigungsschrauben nach der Seite hin zwischen Weiche und Rohrleitung herausgezogen werden können. Es ist günstig, wenn der jeweilige Anschlussstutzen 4a, 4b bzw. 4c in Achsrichtung länger als der Dichtungsträgerring 26 ist, da dann der Ring 26 aus seiner Vertiefung herausgezogen werden kann, ohne die Rohrleitung, in deren Verlauf die dargestellte Weiche angeordnet ist, verschieben zu müssen.

Die Dichtungsträgerringe 26 werden - nach Abmontieren des jeweiligen Anschlussstutzens 4a bis 4c in eine sie aufnehmende Vertiefung eines mit dem Gehäuse 1 druckdicht bzw. gasdicht verbundenen, z.B. angeschweissten Lagerringes 29 eingelegt und können auf diese Weise auch leicht von aussen ausgewechselt werden, falls es erforderlich ist, ohne deshalb das Gehäuse 1 öffnen zu müssen.

Es ist ersichtlich, dass die Leitungen 11 an einer bestimmten Stelle des Dichtungsträgerringes 26 in diesen einmünden sollen, und es ist deshalb vorteilhaft, wenn der jeweilige Dichtungsträgerring 26 mindestens eine, nicht dargestellte, Orientierungsfläche - z.B. eine Abflachung seiner Umfangsfläche, einen in eine Nut eingreifenden Vorsprung od.dgl. - aufweist, die mit einer entsprechenden Gegenfläche des Lagerringes 29 zusammenwirkt. Bevorzugt ist es allerdings, wenn die Leitung 11 in eine am Dichtungsträger 26 vorgesehene Ringnut mündet, die vorzugsweise - gesehen in Achsrichtung - zu ihren beiden Seiten durch, z.B. in weiteren Umfangsnuten angeordnete, O-Ringe oder andere Dichtungsringe abgedichtet ist, wodurch sich die Bearbeitung der Flächen vereinfacht.

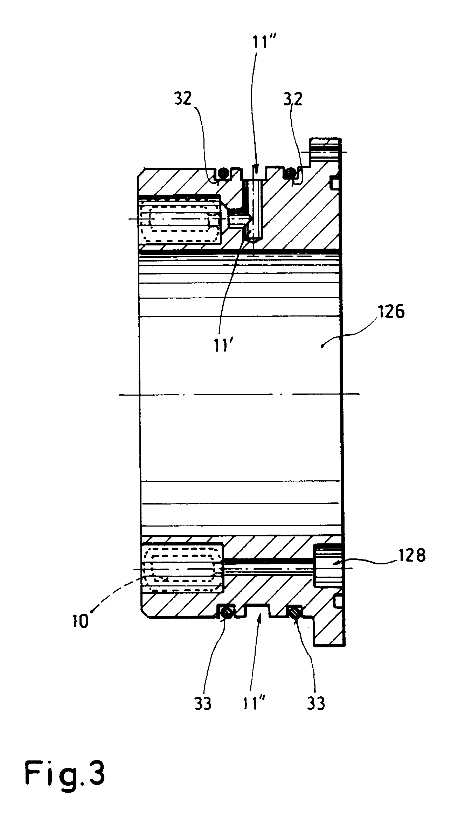

Auf diese Weise ist jedenfalls ein Austausch der Dichtungsringe 10 ohne Zerlegung des Gehäuses nur nach Abnahme des jeweiligen Stutzen 4 möglich, und dies gilt nicht nur für die hier gezeigte Weiche, sondern etwa auch für Ventilkonstruktionen, wie Zellenradschleusen od.dgl. Eine (im Sinne er obigen Erläuterungen) bevorzugte Ausführungsform eines Dichtungsträgerringes 126 ist aus Fig. 3 ersichtlich.

Gemäss Fig. 3 ist am Dichtungsträgerring 126 im Anschluss an den ringseitigen Kanal 11', der etwa dem ringseitigen Abschnitt des Kanales 11 der Fig. 1 entspricht, eine den Trägerring 126 umgebende Ringnut 11'' vorgesehen. Wie immer daher auch die Stellung des Trägerringes 126 in seiner (aus Fig. 1 ersichtlichen) Vertiefung sein mag, in die der lagerringseitige Kanal 11 einmündet, es wird der Zufuhrkanal 11 des Lagerringes 29 stets in die Ringnut 11'' einmünden, von wo das Fluid in den Abzweigkanal 11' gelangt.

Um dabei Druckfluidverluste zu vermeiden, ist es vorteilhaft, wenn - gesehen in Achsrichtung - zu beiden Seiten der Ringnut 11'' Umfangsnuten 32 vorgesehen, in die Dichtungsringe 33, insbesondere O-Ringe - wie dargestellt -, eingesetzt werden. Wie oben erwähnt, ist es vorteilhaft, Ausnehmungen 128 am Dichtungsträgerring 126 (statt der Ausnehmungen 28 am Flansch 4' gemäss Fig. 1) vorzusehen, um die Demontage zu vereinfachen.

Bei Verstellung des Ventil- bzw. Weichenkörpers 2 wird die Druckluftzufuhr unterbrochen, die Dichtungsringe 10 ziehen sich zusammen, der Ventilkörper 2 kann reibungsärmer als bei herkömmlichen Konstruktionen verstellt werden. Diese Dichtungsringe 10 können auch, wie in der DE-A-40 39 982 beschrieben, über das Fördermedium selbst aufblasbar ausgebildet sein. Der Inhalt der DE-A-40 39 982 gilt hiermit im Rahmen der vorliegenden Beschreibung als geoffenbart.

Der Ventilkörper 2 selbst ist im wesentlichen auf die Wandungen der Kanäle 3 und allfälliger Verbindungsflanschen beschränkt, was aber nicht bedeutet, dass die hier als freiliegende Rohrkanäle mit Verschieberichtung senkrecht zur Ebene der Fig. 1 gezeigte Ausführung nicht allenfalls als prismatischer Block verkleidet sein könnte. In jedem Falle ist aber damit zwischen ihm und dem Gehäuse 1 ein freier, allenfalls durch nicht gezeigte Abdichtungen gasdicht gemachter Gasraum 12 gegeben, in den leckendes Fördermedium aus dem Spalt 9 austreten kann. Da das Gehäuse 1 selbst gasdicht und infolge der rotationssymmetrischen Ausbildung auch entsprechend druckfest ausgebildet ist, erweist sich dieser Gasraum 12 in unterschiedlicher Weise als vorteilhaft. Giftige Fördergase können nur erschwert nach aussen dringen und das Bedienungspersonal gefährden. Sauerstoffempfindliche Güter können problemlos gefördert werden, da Inertgas bzw. Vakuum im Gasraum 12 eine zusätzliche Schutzbarriere nach aussen hin bieten. Dazu ist am Gehäuse ein zusätzlicher Flansch 13 vorgesehen, der mit einem, grob schematisch gezeigten, Deckel 14 gasdicht verschlossen werden kann. In der Tat wird dem Stutzen 13 ein (nicht gezeigtes Rückschlagventil zugeordnet sein, um nach einer etwaigen Befüllung des Gasraumes mit Schutzgas beim neuerlichen Aufschrauben des Deckels 14 ein Eindringen von Luft zu verhindern, So kann in den Gasraum 12 austretenes Leckgas entsorgt werden bzw. Inertgas in diesen eingebracht, bzw. der Gasraum 12 evakuiert werden.

Die Verstellung des Ventilkörpers 2 geschieht mittels eines ausserhalb des Gehäuses liegenden Antriebs bekannter Art (nicht dargestellt). Die Führung des Ventilkörpers 2 erfolgt über eine innerhalb des Gasraumes 12 liegende Führungseinrichtung 25. Für grössere Ventilkörper 2 und/oder Verstellbewegungen ist eine doppelte Führung, wie in Fig. 1 dargestellt, vorzuziehen. Dabei sind Führungshülsen 15 und 16 mit dem Ventilkörper 2 verbunden. Die Führungssäulen 17 und 18 sind in diesen Hülsen 15, 16 gelagert, wobei ihre Enden in den Gehäuseseitenwänden festgelegt sind. Eine Führungssäule 17 wird von der zugehörigen Führungshülse 15 umfasst, während - statisch bestimmt - die andere Führungssäule 18 in einer etwa gabelförmigen Führungshülse 16 gelagert ist.

Bei der Förderung von heissem Fördergut bzw. mittels heissen Fördermediums wird sich der Weichenkörper 2, durch den die Gase strömen, naturgemäss stärker ausdehnen als das Gehäuse 1. Dadurch kann sich die Berührungsfläche der Führungshülse 16 an der Führungssäule 18 verändern, ohne dass Spannungen zwischen Führung 25 und dem unter Wärmeeinwirkung gedehnten Weichenkörper ergeben können, die auftreten würden, wäre an Stelle der Gabel 16 ebenfalls eine Rundhülse 15 vorgesehen.

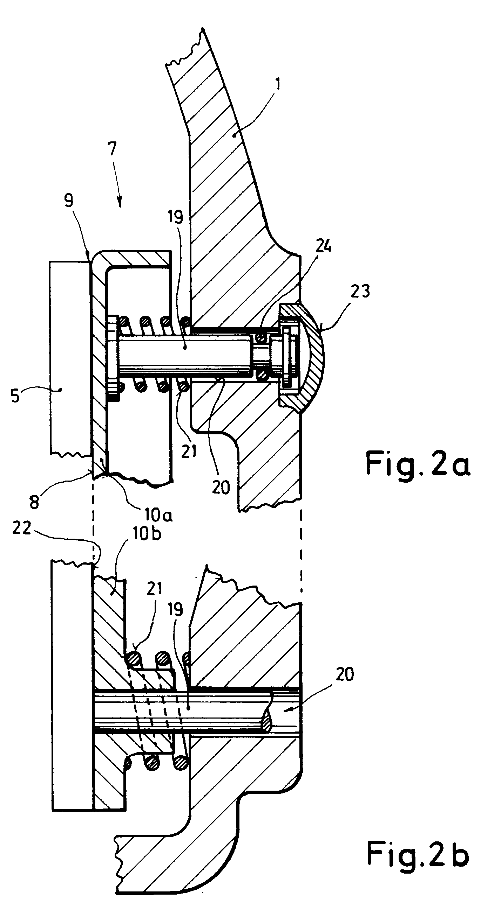

In Fig. 2 sind zwei Teilschnitte durch Ausführungsvarianten einer erfindungsgemässen Dichtungsplatte 7 gezeigt. Sie wird über an ihr befestigte Bolzen 19 gehalten, die in Ausnehmungen 20 im Gehäuse 1 liegen. Zwischen Gehäuse 1 und Dichtungsplatte 7 ist eine elastische Zwischenlage in Form einer Stahldruckfeder 21 vorgesehen, die jeweils eine dichte Anlage der Dichtungsplatte 7 am Endflansch 5 bewirkt. Die dem Verbindungsflansch 5 zugekehrte Dichtungsfläche 22 der Dichtungsplatte 7 schliesst bei Verstellung des Ventilkörpers 2 die Kanalendfläche 8, sodass im Kanal vorhandener Fördergutrückstand nicht ins Gehäuseinnere gelangen kann. Damit dies auch sicher gewährleistet wird, muss die Dichtungsplatte 7 vor, während und nach dem Verstellen des Ventilkörpers 2, somit also in jeder möglichen Stellung des Ventilkörpers 2, an dem Verbindungsflansch 5 anliegen, obwohl ein geringer Spalt zulässig wäre, der kleiner als die Partikelgrösse ist. Für Schiebeweichen, wie die der Fig. 1 hat eine solche Dichtungsplatte 7 demnach eine Dichtungsfläche 22, die parallel zur Verschieberichtung und zur Kanalendfläche 8 liegt. Die Verbindungsflansche 5 können als breite Ringe ausgebildet sein. Aus Fig. 1 ist ersichtlich, dass der sich gegenüber der Dichtungsplatte verschiebende jeweilige Flansch 5a bzw. 5b mit einer Beschichtung 5a' bzw. 5b' zur Verbesserung der Reibungsbedingungen versehen ist. Diese Beschichtung weist vorteilhaft einen Reibungskoëffizienten von maximal 0,7 auf, der aber bevorzugt unter 0,5 liegt, gegebenenfalls um 0,1. Wird beispielsweise für die Beschichtung 5a' eine Polyamid- oder eine Polytetrafluoräthylenbeschichtung gewählt (auch andere Polyäthylene, wie Niederdruck-Polyäthylen wäre möglich), so erhält man je nach verwendetem Kunststoff einen Reibungskoeffizienten von 0,04 bis 0,45.

Anderseits kann es aus Gründen der Abriebfestigkeit wünschenswert sein, eine gehärtete Edelstahlschicht 5b' und/oder 7' (bevorzugt beide) entweder in Form einer Beschichtung oder als entsprechend befestigte Platte anzubringen. Ein besonderer Vorteil einer solchen Beschichtung 5a' bzw. 5b', 7' liegt auch darin, dass sich die Bearbeitung dieser etwas kritischeren Flächen vereinfacht, so dass die Herstellung insgesamt verbilligt wird.

Gewünschtenfalls könnte eine, zweckmässig von aussen bedienbare, Verstellvorrichtung für die Federn 21 vorgesehen werden, doch wird dies im allgemeinen nicht erforderlich sein, und insoferne ist die dargestellte Ausführung mit vorgegebener Federkraft bevorzugt.

Eine erfindungsgemässe Dichtungsplatte 7 ist aber auch in Einkanal- und Mehrkanal-Rotationsweichen einsetzbar. Dann stehen während des Verstellvorgangs schmale Stirnflächen der Kanäle bzw. gerundete Verbindungsflansche mit der Dichtungsfläche in Beziehung.

Die Ausnehmungen 20 im Gehäuse 1 für die Bolzen 19 sind nach aussen hin mit einer, gegebenenfalls gasdichten, Kappe 23 versehen, doch mag die Anordnung eines O-Ringes 24 zur Dichtung ausreichen. Ein solcher Dichtungsring, der gegenüber einer Stopfbüchsendichtung od. dgl. bevorzugt ist, wäre auch im Falle einer gasdichten Kappe 23 vorteilhaft.

Die Dichtungsplatten 7 können aus Stahlblech 10a mit aufgeschweissten Bolzen 19 oder aus Gussteilen 10b mit Rippen zur Stabilisierung und zur Aufnahme der Druckfeder hergestellt sein. Die Dichtungsfläche 22, ebenso wie die Kontaktfläche am Ventilkörper 2, ob Verbindungsflansch 5 oder nur Stirnfläche, können zur Verminderung von eventuell möglicher Gleitreibung mit einem Gleitwerkstoff, allenfalls lösbar, versehen bzw. beschichtet sein, oder eventuell aus diesem bestehen.

## Patentansprüche

1. Rohrweiche mit einem innerhalb eines mit wenigstens drei Anschlussstutzen (4) versehenen Gehäuses (1) verschiebbaren Ventilkörper (2), innerhalb dessen sich zumindest ein Kanal (3) erstreckt, wobei der Ventilkörper (2) innerhalb des Gehäuses (1) mit Hilfe einer Führungseinrichtung (25) bei seiner Bewegung geführt ist und in einer seiner Stellungen über den wenigstens einen Kanal (3) eine durchgehende Verbindung zwischen wenigstens zwei der Anschlussstutzen (4c; 4a) hergestellt ist, wogegen sich in einer anderen Stellung des Ventilkörpers (2) eine andere Verbindung ergibt, wobei zwischen Ventilkörper (2) und Gehäuse (1) ein freier Gasraum (12) vorgesehen ist, und wobei der Ventilkörper (2) innerhalb dieses Gasraumes (12) - mit Ausnahme von den Endflächen (8) der Kanäle (3) zugeordneten Stirnflächen - berübrungsfrei relativ zu den Gehäuseinnenflächen mittels einer Geradführung (25) geführt ist, dadurch gekennzeichnet, dass die Geradführung (25) im wesentlichen senkrecht auf einer Ebene durch die Zentren der, wenigstens drei, Anschlussstutzen (4) steht.

2. Rohrweiche nach Anspruch 1, dadurch gekennzeichnet, dass wenigstens eines der folgenden Merkmale vorgesehen ist:
a) das Gehäuse (1) ist gasdicht ausgebildet;
b) der Gasraum (12) umfasst wenigstens gleich viel Volumen wie einer der Kanäle (3);
c) das den Gasraum (12) begrenzende Gehäuse (1) ist annähernd rotationssymmetrisch ausgebildet, insbesondere zylindrisch mit zur Verschieberichtung paralleler Achse;
d) das Gehäuse (1) weist wenigstens einen zusätzlichen, in den Gasraum (12) führenden Einlass- bzw. Auslassstutzen (13) auf;
e) die Geradführung (25) als Säulenführung für einen Schiebeweichen-Ventilkörper (2) ausgebildet ist.

3. Rohrweiche nach einem der vorhergehenden Ansprüche, dadurch gekennzeichnet, dass die - insbesondere doppelte, vorzugsweise an verschiedenen Seiten des Ventilkörpers (2) angreifende - Führungseinrichtung (25) innerhalb des Gasraums (12) liegt, und dass bevorzugt wenigstens eine am Gehäuse (1) festgelegte - insbesondere im Querschnitt mit wenigstens einer abgeflachten Begrenzungsfläche versehene - Führungssäule (17; 18) vorgesehen ist, die wenigstens teilweise - insbesondere gabelförmig - in einer mit dem Ventilkörper (2) verbundenen Führungshülse (15; 16) gelagert ist.

4. Rohrweiche nach einem der vorhergehenden Ansprüche, dadurch gekennzeichnet, dass zwischen dem mittels der Geradführung (25) geführten Ventilkörper (2) und dem jeweiligen Anschlussstutzen (4) des Gehäuses (1) Dichtungsringe (10) an den Gehäuseanschlussstutzen (4) vorgesehen sind, die, durch das Fördermedium, aufblasbar sind.

5. Rohrweiche nach einem der vorhergehenden Ansprüche, dadurch gekennzeichnet, dass folgendes Merkmal vorgesehen ist:
der Ventilkörper (2) weist an wenigstens einem Ende der Kanäle (3) jeweils einen Verbindungsflansch (5) auf, gegen den zumindest eine innerhalb des Gehäuses (1) angeordnete, den Anschlussstutzen zugeordnete, mit Durchgangsöffnungen versehene Dichtungsplatte (7) durch eine Anpressvorrichtung anpressbar ist, wobei vorzugsweise die die Abdichtung des Kanals (3) bewirkende Dichtungsfläche (22) der Dichtungsplatte (7) der geometrische Ort aller während des Verstellvorgangs des Ventilkörpers (2) möglichen Positionen der Stirnfläche(n) des Kanals (3) ist.

6. Rohrweiche nach einem der vorangehenden Ansprüche, dadurch gekennzeichnet, dass der Ventilkörper (2) an wenigstens einem Ende der Kanäle (3) jeweils einen Verbindungsflansch (5) aufweist, gegen den zumindest eine innerhalb des Gehäuses (1) angeordnete, den Anschlussstutzen zugeordnete, mit Durchgangsöffnungen versehene Dichtungsplatte (7) durch eine Anpressvorrichtung anpressbar ist, dass vorzugsweise wenigstens eine - insbesondere bolzenförmige - Führung (19) zwischen Dichtungsplatte (7) und Gehäuse (1) vorgesehen ist, die mit wenigstens einem Vorspannelement - vorzugsweise einer Schraubendruckfeder (21) - zusammenwirkt,
und dass bevorzugt wenigstens eines der folgenden Merkmale vorgesehen ist:
a) die Führung (19) ist an der Dichtungsplatte (7) befestigt und in einer entsprechenden Ausnehmung (20) der Gehäusewand beweglich geführt, wobei vorzugsweise das Vorspannelement von der Gehäuseaussenwand her einstellbar ist;
b) eine Dichtung (23, 24) ist zwischen Gehäuse (1) und Führung (19) vorgesehen, die insbesondere einen Führungsbolzen (19) umschliessenden O-Ring (24) umfasst.

7. Rohrweiche nach Anspruch 6, dadurch gekennzeichnet, dass die Dichtungsfläche (22) der Dichtungsplatte (7) und/ oder wenigstens eine Stirnfläche des Kanals (3) mit einem Gleitwerkstoff beschichtet sind, bzw. aus diesem bestehen, vorzugsweise mit einem Reibungskoëffizienten von maximal 0,7, vorzugsweise maximal 0,5, gegebenenfalls unter 0,2.

8. Rohrweiche nach Anspruch 6 oder 7, dadurch gekennzeichnet, dass wenigstens eines der folgenden Merkmale vorgesehen ist:
a) der am Dichtungsträgerring (26) befestigte Dichtungsring (10) ist über eine Fluidleitung (11) mit einem Fluid aufweitbar;
b) die den Dichtungsträgerring (26) aufnehmende, nach aussen gekehrte Vertiefung (30) ist an einem mit dem Gehäuse (1) fest verbundenen Lagerring (29) ausgebildet.

9. Rohrweiche nach Anspruch 8, dadurch gekennzeichnet, dass eine zur Vertiefung (30) führende, insbesondere den Lagerring (29), zweckmässig wenigstens annähernd radial, durchsetzende, Fluidleitung (11) den Dichtungsträgerring (26), bevorzugt radial, bis zum Erreichen des Dichtungsringes (10) durchquert, und dass vorzugsweise die Leitung (11) in eine am Dichtungsträger (26) vorgesehene Ringnut mündet, die vorzugsweise - gesehen in Achsrichtung - zu ihren beiden Seiten durch, z.B. in weiteren Umfangsnuten angeordnete, Dichtungsringe, insbesondere O-Ringe, abgedichtet ist.

10. Rohrweiche nach einem der Ansprüche 6 bis 9, dadurch gekennzeichnet, dass das Gehäuse (1) mit wenigstens einem Anschlussstutzen (4a, 4b, 4c) versehen ist, in dessen Einmündungsbereich in das Gehäuse (1) der Dichtungsträgerring (26) angeordnet ist, und dass der Anschlussstutzen (4a, 4b, 4c) eine grössere axiale Länge besitzt als der Dichtungsträgerring (26).

## Claims

1. A pipe distributing guide having a valve body (2) which is displaceable inside a housing (1) provided with at least three connection pieces (4), within which valve body at least one channel (3) extends, wherein the valve body (2) is guided during its movement inside the housing (1) with the aid of a guidance device (25) and a continuous connection between at least two of the connection pieces (4c; 4a) is produced in one of the positions of the valve body via the at least one channel (3), whereas another connection is formed in another position of the valve body (2), wherein a free gas space (12) is provided between the valve body (2) and the housing (1), and wherein the valve body (2) is guided within this gas space (12) - with the exception of the faces associated with the end faces (8) of the channels (3) - without contact in relation to the internal faces of the housing by means of a straight guide (25), characterised in that the straight guide (25) is located substantially perpendicularly on a plane through the centres of the at least three connection pieces (4).

2. A pipe distributing guide according to claim 1, characterised in that at least one of the following features is provided:
a) the housing (1) is of gas-tight construction;
b) the gas space (12) comprises at least as much volume as one of the channels (3);
c) the housing (1) which delimits the gas space (12) is constructed with approximately rotational symmetry, and in particular is cylindrical with its axis parallel to the direction of displacement;
d) the housing (1) has at least one additional inlet or outlet connection piece (13) leading into the gas space (12);
e) the straight guide (25) is constructed as a pillar guide for a sliding distributor guide valve body (2).

3. A pipe distributing guide according to either one of the preceding claims, characterised in that the guidance device (25) - particularly a double guidance device preferably acting on different sides of the valve body (2) - is situated inside the gas space (12), and that preferably at least one guide pillar (17; 18) is provided fixed to the housing (1) - particularly a guide pillar provided in cross-section with at least one flattened periphery, which guide pillar is at least partially mounted - particularly in a fork-like manner - in a guide sleeve (15; 16) attached to the valve body (2).

4. A pipe distributing guide according to any one of the preceding claims, characterised in that sealing rings (10) are provided on the housing connection pieces (4) between the valve body (2), which is guided by means of the straight guide (25), and the respective connection piece (4) of the housing (1), which sealing rings can be inflated by the medium being conveyed.

5. A pipe distributing guide according to any one of the preceding claims, characterised in that the following feature is provided:
the valve body (2) has a connection flange (5) at at least one end of each of the channels (3), against which connection flange at least one seal plate (7) can be pressed by a contact pressure device, which seal plate is disposed inside the housing (1), is associated with the connection pieces and is provided with passageway openings, wherein the seal face (22) of the seal plate (7) which effects the sealing of the channel (3) is the geometric location of all the positions of the face(s) of the channel (3) which are possible during the adjustment operation of the valve body (2).

6. A pipe distributing guide according to any one of the preceding claims, characterised in that the valve body (2) has a connection flange (5) at at least one end of each of the channels (3), against which connection flange at least one seal plate (7) can be pressed by a contact pressure device, which seal plate is disposed inside the housing (1), is associated with the connection pieces and is provided with passageway openings, that preferably at least one guide (19) - particularly a pin-shaped guide - is provided between the seal plate (7) and the housing (1), which guide cooperates with at least one prestressing element - preferably a helical pressure spring (21), and that preferably at least one of the following features is provided:
a) the guide (19) is attached to the seal plate (7) and is movably guided in a corresponding recess (20) in the housing wall, wherein the prestressing element can preferably be adjusted from the outside wall of the housing;
b) a seal (23, 24) is provided between the housing (1) and the guide (19), which comprises in particular an O-ring (24) surrounding a guide pin (19).

7. A pipe distributing guide according to claim 6, characterised in that the seal face (22) of the seal plate (7) and/or at least one face of the channel (3) is coated with a sliding lubricant or consists of the latter, preferably with a maximum coefficient of friction of 0.7, most preferably 0.5, optionally less than 0.2.

8. A pipe distributing guide according to claim 6 or 7, characterised in that at least one of the following features is provided:
a) the sealing ring (10) attached to the seal support ring (26) can be expanded with a fluid via a fluid line (11);
b) the outwardly facing indentation (30) which receives the seal support ring (26) is constructed on a bearing ring (29) rigidly attached to the housing (1).

9. A pipe distributing guide according to claim 8, characterised in that a fluid line (11), which leads to the indentation (30) and which passes in particular through the bearing ring (29), advantageously at least approximately radially, traverses the seal support ring (26), preferably radially until it reaches the sealing ring (10), and preferably that the line (11) leads into an annular groove provided on the seal support (26), which annular groove is preferably sealed on both its sides - as seen in the axial direction - by sealing rings, particularly O-rings, which are disposed in additional peripheral grooves, for example.

10. A pipe distributing guide according to any one of claims 6 to 9, characterised in that the housing (1) is provided with at least one connection piece (4a, 4b, 4c), wherein the seal support ring (26) is disposed in the region of the latter which leads into the housing (1), and that the connection piece (4a, 4b, 4c) has a greater axial length than the seal support ring (26).

## Revendications

1. Aiguillage tubulaire comportant un corps de vanne (2) pouvant se déplacer à l'intérieur d'un boîtier (1) doté d'au moins trois raccordements (4) et traversé par au moins un canal (3) s'étendant à l'intérieur de ce boîtier (1), le corps de vanne (2) étant guidé à l'aide d'un dispositif de guidage (25) lors de son déplacement dans le boîtier (1), tandis qu'une liaison de passage entre au moins deux des raccordements (4c; 4a) est réalisée dans une de ses positions par l'intermédiaire du canal (3) au moins présent, et qu'au contraire dans une autre position du corps de vanne (2) on obtient une autre liaison, un espace libre pour gaz (12) étant prévu entre le corps de vanne (2) et le boîtier (1), le corps de vanne (2) étant guidé à l'aide d'un guide rectiligne (25), à l'intérieur de cette enceinte pour gaz (12) sans contact avec les surfaces intérieures du boîtier, à l'exception des surfaces d'extrémité (8) des surfaces frontales associées aux canaux (3), caractérisé en ce que le guide rectiligne (25) est disposé essentiellement perpendiculairement à un plan passant par les centres des raccordements (4) présents au moins au nombre de trois.

2. Aiguillage tubulaire selon la revendication 1, caractérisé en ce qu'au moins une des caractéristiques suivantes est prévue:
a) le boîtier (1) est réalisé étanche au gaz;
b) l'enceinte pour gaz (12) comporte un volume au moins égal à celui d'un des canaux (3);
c) le boîtier (1) délimitant l'espace pour gaz (12) est configuré sensiblement à symétrie de rotation, et en particulier en forme de cylindre d'axe parallèle à la direction de déplacement;
d) le boîtier (1) présente au moins un raccordement supplémentaire d'entrée ou de sortie (13) conduisant dans l'enceinte pour gaz (12);
e) le guide rectiligne (25) est configuré comme guide à tige pour un corps de vanne (2) à tiroir d'aiguillage.

3. Aiguillage tubulaire selon l'une des revendications précédentes, caractérisé en ce que le dispositif de guidage (25), en particulier double et de préférence en contact avec des côtés différents du corps de vanne (2), est situé à l'intérieur de l'enceinte pour gaz (12), et en ce qu'il est prévu de préférence au moins une tige de guidage (17; 18) fixée au boîtier (1), et dotée d'au moins une surface limite aplatie, en particulier en coupe qui est montée au moins partiellement, en particulier en forme de fourche, dans une douille de guidage (15; 16) reliée au corps de vanne (2).

4. Aiguillage tubulaire selon l'une des revendications précédentes, caractérisé en ce qu'entre le corps de vanne (2) guidé au moyen du guide rectiligne (25) et chaque raccordement (4) du boîtier (1), des bagues d'étanchéité (10) sont prévues sur les raccordements au boîtier (4), et peuvent être attaquées par le fluide de transport.

5. Aiguillage tubulaire selon l'une des revendications précédentes, caractérisé en ce que les caractéristiques suivantes sont prévues:
au moins à une extrémité de chaque canal (3), le corps de vanne (2) présente, une bride de raccordement (5), contre laquelle au moins une plaque d'étanchéité (7) disposée à l'intérieur du boîtier (1), associée au raccordement et dotée d'ouvertures de passage, peut être repoussée par un dispositif de compression, la surface d'étanchéité (22) de la plaque d'étanchéité (7), réalisant l'étanchéité du canal (3), étant le lieu géométrique de toutes les positions possibles de la ou des surfaces frontales du canal (3) pendant l'opération de déplacement du corps de vanne (2).

6. Aiguillage tubulaire selon l'une des revendications précédentes, caractérisé en ce qu'au moins à une extrémité de chaque canal (3), le corps de vanne (2) présente une bride de raccordement (5) contre laquelle une plaque d'étanchéité (7) disposée à l'intérieur du boîtier (1), associée aux raccordements, dotée d'ouvertures de passage, peut être repoussée par un dispositif de compression, et en ce que de préférence au moins un guide (19), en particulier en forme de boulon, est prévu entre la plaque d'étanchéité (7) et le boîtier (1), et coopère avec au moins un élément de précontrainte, de préférence un ressort hélicoïdal de compression (21),
et en ce que de préférence, au moins une des caractéristiques suivantes est prévue:
a) le guide (19) est fixé à la plaque d'étanchéité (7) et est guidé à déplacement dans un évidement correspondant (20) de la paroi du boîtier, l'élément de précontrainte pouvant de préférence être réglé depuis la paroi extérieure du boîtier;
b) il est prévu un joint d'étanchéité (23, 24) entre le boîtier (1) et le guide (19), qui comporte en particulier un joint torique (24) entourant un boulon de guidage (19).

7. Aiguillage tubulaire selon la revendication 6, caractérisé en ce que la surface d'étanchéité (22) de la plaque d'étanchéité (7) et/ou au moins une surface frontale du canal (3) sont recouvertes d'un matériau glissant, ou sont constituées de celui-ci, qui présente de préférence un coefficient de frottement d'au plus 0,7, de préférence d'au plus 0,5 et éventuellement inférieur à 0,2.

8. Aiguillage tubulaire selon la revendication 6 ou 7, caractérisé en ce qu'au moins une des caractéristiques suivantes est prévue:
a) la bague d'étanchéité (10) fixée sur la bague de support d'étanchéité (26) peut être dilatée par un fluide, par l'intermédiaire d'une conduite de fluide (11);
b) le creux (30) tourné vers l'extérieur et recevant la bague de support d'étanchéité (26) est formé sur une bague de montage (29) solidaire du boîtier (1).

9. Aiguillage tubulaire selon la revendication 8, caractérisé en ce qu'une conduite de fluide (11) conduisant au creux (30), traversant en particulier la bague de montage (29), et opportunément de manière au moins approximativement radiale, traverse la bague (26) de support d'étanchéité, de préférence radialement, jusqu'à atteindre la bague d'étanchéité (10), et en ce que la conduite (11) débouche de préférence dans une rainure annulaire prévue sur le support d'étanchéité (26), cette rainure annulaire étant rendue étanche de préférence sur ses deux côtés, vus dans la direction de l'axe, par exemple par des bagues d'étanchéité, en particulier des anneaux toriques, disposés dans d'autres rainures périphériques.

10. Aiguillage tubulaire selon l'une des revendications 6 à 9, caractérisé en ce que le boîtier (1) est doté d'au moins un raccordement (4a, 4b, 4c) la bague (26) de support d'étanchéité étant disposée dans la zone où il débouche dans le boîtier (1), et en ce que le raccordement (4a, 4b, 4c) possède une longueur axiale plus grande que la bague (26) de support d'étanchéité.
